# FASCICULE DE BREVET EUROPEEN

(11) **EP 2 547 239 B1**
(45) Date de publication et mention de la délivrance du brevet: **20.04.2016**
(21) Numéro de dépôt: 11715946.7
(22) Date de dépôt: 18.03.2011
(51) Int. Cl.: A47J 27/08

(54) **APPAREIL DE CUISSON D'ALIMENTS SOUS PRESSION AVEC DOSAGE DU LIQUIDE DE CUISSON, DOSEUR ET PROCÉDÉ DE CUISSON AFFÉRENT**
LEBENSMITTELSCHNELLKOCHANWENDUNG MIT MESSUNG DER KOCHFLÜSSIGKEIT, MESSVORRICHTUNG UND DAMIT ZUSAMMENHÄNGENDES KOCHVERFAHREN
FOOD PRESSURE-COOKING APPLIANCE WITH METERING OF COOKING LIQUID, METERING DEVICE AND COOKING METHOD RELATING THERETO

(30) Priorité: 26.08.2010 FR 1056793; 19.03.2010 FR 1051990
(43) Date de publication de la demande: 23.01.2013
(73) Titulaire: SEB S.A., 69130 Ecully (FR)
(72) Inventeur: COHADE, Guillaume, F-21000 Dijon (FR); MURAT, Marie-Pierre, Evelyne, F-21121 Fontaine Les Dijon (FR)
(74) Mandataire: Weber, Jean-François
(86) Numéro de dépôt international: PCT/FR2011/050561
(87) Numéro de publication internationale: WO 2011/114075

(56) Documents cités:
- EP-A1- 0 860 131
- EP-A2- 1 458 268
- WO-A1-2008/016197
- WO-A2-2009/016566
- JP-A- 62 011 413
- US-A- 3 530 722
- US-A- 5 404 803

## Description

### DOMAINE TECHNIQUE

La présente invention se rapporte au domaine technique général de la cuisson d'aliments sous pression dans une atmosphère chargée en vapeur, du genre autocuiseur.

La présente invention concerne plus précisément un appareil de cuisson d'aliments sous pression en présence d'un liquide de cuisson, ledit appareil comprenant au moins d'une part une cuve destinée à accueillir les aliments et le liquide de cuisson et d'autre part un régulateur pour maintenir la pression régnant dans la cuve à une valeur de consigne, dite pression de fonctionnement.

La présente invention concerne également un doseur pour un appareil de cuisson d'aliments sous pression en présence d'un liquide de cuisson, ledit appareil comprenant au moins d'une part une cuve destinée à accueillir les aliments et le liquide de cuisson et d'autre part un régulateur pour maintenir la pression régnant dans la cuve à une valeur de consigne, dite pression de fonctionnement.

La présente invention concerne enfin un procédé de cuisson d'aliments sous pression en présence d'un liquide de cuisson, ledit procédé comprenant une étape d'introduction dans une cuve des aliments et une étape d'introduction dans ladite cuve du liquide de cuisson.

### TECHNIQUE ANTERIEURE

La cuisson d'aliments au sein d'un autocuiseur nécessite généralement d'être effectuée en présence d'un liquide de cuisson, constitué le plus souvent par de l'eau. La présence d'un tel liquide de cuisson en quantité suffisante est particulièrement importante lorsque les aliments sont disposés non pas directement sur le fond de la cuve de l'autocuiseur mais dans un panier disposé à distance du fond de cuve. En effet, lorsque l'autocuiseur monte en pression, sa soupape de régulation évacue sous forme de vapeur toute l'énergie excédentaire apportée à l'autocuiseur par la source de chauffe, afin d'éviter que ce dernier ne monte trop en pression.

Cette régulation s'accompagne bien entendu d'une perte d'eau en cuve, l'eau contenue dans la cuve étant en effet expulsée sous forme de vapeur par la soupape de régulation. Cette perte d'eau en cuve est particulièrement importante lorsque tout le cycle de cuisson est effectué avec une puissance de chauffe maximale, qui conduit à une expulsion importante de vapeur d'eau par la soupape de régulation. Il est ainsi possible, si la cuisson est effectuée trop longtemps et/ou avec une puissance de chauffe trop importante, d'éliminer totalement l'eau présente dans la cuve. En l'absence de cette eau, plus rien ne repose sur le fond de la cuve de l'autocuiseur (puisque les aliments sont positionnés dans un panier situé à distance de ce fond), ce qui engendre un échauffement anormal du fond de cuve (phénomène connu sous l'appellation *« chauffe à sec* ») susceptible de provoquer une dégradation de l'autocuiseur, et notamment des pièces en matière plastique de ce dernier. La chauffe à sec est un phénomène d'autant plus dangereux que les premières pièces qui subissent une dégradation du fait de ce phénomène sont les pièces en élastomère, alors même que ces pièces en élastomère sont le plus souvent associées à une fonction de sécurité (soupape de sécurité, joint, etc.).

Il est donc absolument nécessaire d'éviter que toute l'eau de cuisson disparaisse sous forme de vapeur, notamment lors d'une cuisson d'aliments dans un panier disposé au sein de l'autocuiseur.

Une solution simple à ce problème consiste à introduire une quantité d'eau importante dans l'autocuiseur avant la cuisson. Ainsi, certains fabricants d'autocuiseurs préconisent d'introduire 750 ml d'eau dans l'autocuiseur pour toute cuisson d'aliments dans le panier de l'autocuiseur. Une telle quantité d'eau permet de retarder la survenance éventuelle du phénomène de chauffe à sec mais conduit à une importante et inutile consommation d'énergie en début de cuisson, pour atteindre les température et pression de fonctionnement de l'autocuiseur. Ce gaspillage d'énergie, qui s'accompagne d'une perte de temps et d'argent, n'est pas acceptable à une époque où chacun cherche au contraire à maîtriser et limiter ses consommations en énergie et en ressources naturelles, dont fait partie l'eau.

L'utilisateur est certes tout à fait libre d'introduire dans sa cuve une quantité d'eau moindre que celle habituellement recommandée (de l'ordre de 750 ml donc).

Toutefois, sauf à maîtriser parfaitement tous les paramètres de cuisson et les taux d'évaporation qui en découlent, la quantité d'eau qu'il introduira sera généralement le fruit du hasard ou du moins d'une démarche très empirique et donc non optimale.

Afin d'aider l'utilisateur à ajuster la quantité de liquide de cuisson dans la cuve, on connaît déjà des autocuiseurs pourvus d'une cuve graduée. Ces graduations permettent toutefois simplement à l'utilisateur d'introduire un peu plus aisément des quantités précises de liquide dans la cuve, mais ne sont d'aucun secours pour aider l'utilisateur à déterminer la valeur optimale de ces quantités.

Un appareil de cuisson, un doseur et un procédé de cuisson selon l'art antérieur est par exemple décrit dans le document WO2008/016197 A1.

### EXPOSE DE L'INVENTION

Les objets assignés à l'invention visent en conséquence à remédier aux différents inconvénients énumérés précédemment, et à proposer un nouvel appareil de cuisson d'aliments sous pression, qui permette à l'utilisateur d'introduire de façon particulièrement simple, intuitive et rapide, un liquide de cuisson dans l'autocuiseur en une quantité qui permette d'optimiser la durée du cycle de cuisson et la consommation d'énergie requise pour ce cycle de cuisson, tout en minimisant le risque de chauffe à sec.

Un autre objet de l'invention vise à proposer un nouvel appareil de cuisson d'aliments sous pression qui soit de conception particulièrement simple et bon marché.

Un autre objet de l'invention vise à proposer un nouvel appareil de cuisson d'aliments sous pression qui soit d'utilisation extrêmement simple et pratique.

Un autre objet de l'invention vise à proposer un nouvel appareil de cuisson d'aliments sous pression qui permette d'obtenir d'excellentes performances énergétiques pour un coût de fabrication maîtrisé, comparable à celui d'un appareil de l'art antérieur.

Un autre objet de l'invention vise à proposer un nouvel appareil de cuisson d'aliments sous pression, dont le fonctionnement est particulièrement rassurant pour l'utilisateur qui est guidé lors de la préparation de la cuisson.

Un autre objet de l'invention vise à proposer un nouvel appareil de cuisson d'aliments sous pression qui présente un caractère compact et est facile à ranger.

Un autre objet de l'invention vise également à proposer un nouvel appareil de cuisson d'aliments sous pression qui est facile et rapide à nettoyer.

Un autre objet de l'invention vise à proposer un nouvel appareil de cuisson d'aliments sous pression dont l'encombrement n'excède sensiblement pas celui d'un appareil de l'art antérieur.

Un autre objet de l'invention vise à proposer un nouvel appareil de cuisson d'aliments sous pression qui ne nécessite qu'un minimum d'intervention de la part de l'utilisateur.

Les objets assignés à l'invention sont atteints à l'aide d'un appareil de cuisson d'aliments sous pression en présence d'un liquide de cuisson, selon la revendication 1.

Les objets assignés à l'invention sont également atteints à l'aide d'un doseur pour appareil de cuisson sous pression en présence d'un liquide de cuisson, selon la revendication 10.

Les objets assignés à l'invention sont enfin également atteints à l'aide d'un procédé de cuisson d'aliments sous pression en présence d'un liquide de cuisson, selon la revendication 12.

### DESCRIPTIF SOMMAIRE DES DESSINS

D'autres objets et avantages de l'invention seront explicités plus en détails à la lecture de la description qui suit et des dessins annexés donnés à titre d'exemples illustratifs et non limitatifs dans lesquels :
- la figure 1 illustre, selon une vue schématique en perspective, un appareil de cuisson d'aliments sous pression conforme à un premier mode de réalisation de l'invention.
- la figure 2 illustre, selon une vue schématique en perspective, un détail de réalisation de l'appareil de la figure 1.
- la figure 3 illustre, selon une vue schématique en coupe, la cuve et le panier de l'appareil de la figure 1.
- la figure 4 illustre, selon une vue en perspective, un premier mode de réalisation du doseur de l'appareil de cuisson sous pression des figures 1 à 3.
- les figures 5 à 7 représentent des marquages présents sur les faces du doseur de la figure 4.
- la figure 8 illustre, selon une vue en perspective, un doseur conforme à un deuxième mode de réalisation de l'invention.
- la figure 9 illustre, selon une vue en perspective, le doseur de la figure 8 associé à un panier d'autocuiseur spécialement conçu à cet effet.
- la figure 10 illustre, selon une vue en perspective, un doseur conforme à un troisième mode de réalisation de l'invention.
- la figure 11 illustre, selon une vue de face, le doseur de la figure 10.

### MEILLEURE MANIERE DE REALISER L'INVENTION

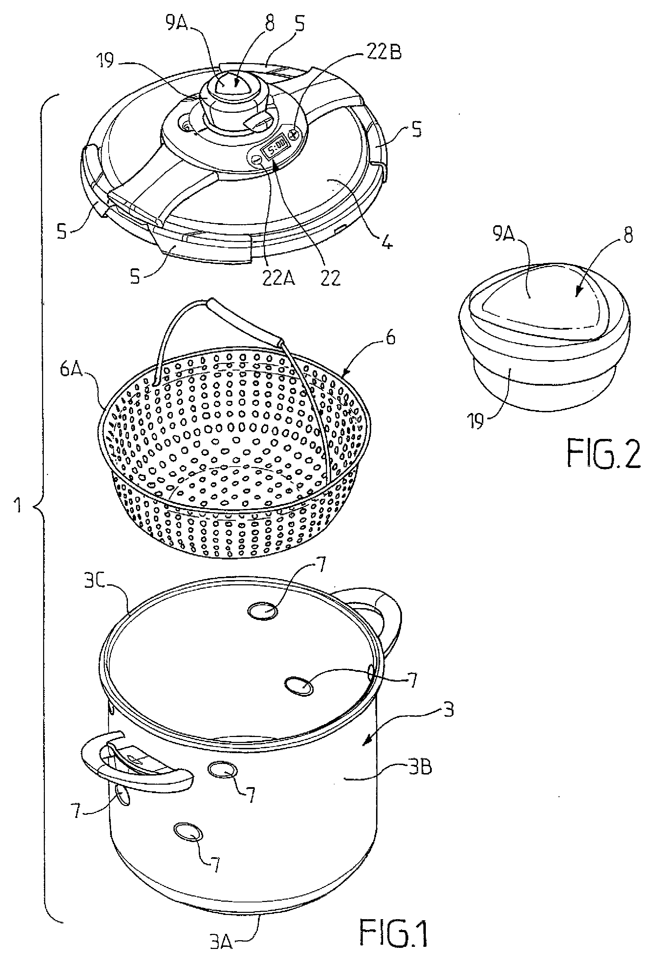

La figure 1 illustre un appareil 1 de cuisson d'aliments sous pression en présence d'un liquide de cuisson 2. L'appareil 1 constitue ainsi un autocuiseur, c'est-à-dire un appareil capable de former une enceinte de cuisson suffisamment étanche pour permettre à la pression régnant en son sein de croître et d'excéder sensiblement la pression atmosphérique lorsque l'enceinte de cuisson est soumise à la puissance thermique d'une source de chauffe, telle qu'une plaque de cuisson.

Avantageusement, comme illustré à la figure 1, l'appareil 1 de cuisson d'aliments sous pression comprend au moins une cuve 3 destinée à accueillir les aliments et le liquide de cuisson 2 en présence duquel les aliments sont destinés à cuire. De préférence, la cuve 3 est réalisée en un matériau métallique, et forme un réceptacle pourvu d'un fond thermo-conducteur 3A à partir et à la périphérie duquel s'élève une paroi latérale annulaire 3B dont le bord libre 3C définit une ouverture permettant l'introduction dans la cuve 3 des aliments et du liquide de cuisson 2. Avantageusement, l'appareil 1 comprend en outre un couvercle 4 destiné à être rapporté sur la cuve 3 pour former avec cette dernière une enceinte de cuisson capable de monter en pression, y compris à des niveaux élevés (par exemple excédant la pression atmosphérique de 4,5 à 120 kPa). A cet effet, le couvercle 4 et la cuve 3 sont pourvus de moyens d'inter-verrouillage permettant de verrouiller le couvercle 4 sur la cuve 3, un joint d'étanchéité étant interposé entre le couvercle 4 et la cuve 3 pour permettre la montée en pression au sein de l'enceinte de cuisson ainsi réalisée. Dans l'exemple illustré aux figures, lesdits moyens d'inter-verrouillage sont constitués par un système de mâchoires 5 destinées à enserrer le bord supérieur libre 3C de la cuve 3, lesdites mâchoires 5 étant montées à coulissement radial sur le couvercle 4 entre une position de verrouillage et une position de déverrouillage. Un tel moyen de verrouillage/déverrouillage à mâchoires 5 est bien connu en tant que tel, et ne sera donc pas décrit plus avant ici. Bien entendu, l'appareil 1 de cuisson sous pression conforme à l'invention peut mettre en oeuvre tout autre moyen de verrouillage/déverrouillage, et par exemple un système à baïonnette, à étrier, à segments, etc., sans pour autant que l'on sorte du cadre de l'invention.

Comme cela est bien connu en tant que tel, l'appareil 1 de cuisson sous pression comprend un régulateur pour maintenir la pression régnant dans la cuve 3 à une valeur de consigne, dite pression de fonctionnement. De préférence, le régulateur comprend une soupape de régulation de pression (par exemple à poids ou à ressort, éventuellement à tarage réglable) conçue pour maintenir la pression de vapeur régnant dans l'appareil à une valeur prédéterminée sensiblement constante, appelée pression de fonctionnement. A cet effet, le régulateur est avantageusement conçu pour permettre une fuite de vapeur dès que la pression à l'intérieur de l'enceinte de cuisson (formé par la cuve 3 et le couvercle 4) excède la valeur de consigne, et pour conserver un caractère sensiblement hermétique tant que la pression régnant dans l'enceinte (et à laquelle sont soumise les aliments) n'excède pas la valeur de consigne. De préférence, la valeur de consigne (ou chaque valeur de consigne, dans le cas d'une soupape de régulation à tarage réglable) excède la pression atmosphérique d'une valeur comprise entre 4,5 et 120 kPa, de façon encore plus préférentielle entre 15 et 100 kPa, et par exemple entre 20 et 90 kPa.

Avantageusement, l'appareil 1 comprend en outre une interface 22 permettant à l'utilisateur de saisir une durée de cuisson des aliments à la pression de fonctionnement. En d'autres termes, l'interface 22 permet de saisir une durée pendant laquelle les aliments cuiront en étant soumis à une valeur de pression sensiblement constante correspondant à la valeur de consigne. Cette interface 22 peut par exemple se présenter sous la forme d'un minuteur pourvu de deux boutons 22A, 22B permettant respectivement de décrémenter et d'incrémenter une variable correspondant à la durée souhaitée de cuisson sous pression des aliments. L'interface 22 permet ainsi, lorsqu'elle est constituée par un minuteur comme illustré à la figure 1, de faire retentir un signal sonore et/ou visuel signalant à l'utilisateur que la durée de cuisson sous pression qu'il avait saisie est écoulée, ce qui signe la fin du cycle de cuisson. La durée saisie par l'utilisateur est dans ce cas décomptée à partir du moment où le niveau de pression dans l'enceinte de cuisson a atteint la pression de fonctionnement. Afin de détecter l'atteinte de cette pression de fonctionnement, l'interface 22 est avantageusement reliée à un capteur de température et/ou de pression sensible aux conditions régnant dans l'enceinte de cuisson. Il est par exemple envisageable que l'interface 22 soit reliée à un capteur de température disposé dans une cheminée d'évacuation de vapeur communiquant avec la soupape de régulation, comme décrit dans le document EP-1 458 268. Le recours à un tel minuteur conduit à une optimisation du processus de cuisson, en permettant à l'utilisateur de diminuer tout d'abord la puissance de la source de chauffe au moment adéquat, c'est-à-dire lorsque l'atteinte de la pression de fonctionnement est détectée par le minuteur (par l'intermédiaire du capteur de température), puis d'éteindre complètement la source de chauffe lorsque la durée de cuisson des aliments sous pression qu'il avait saisie à l'aide des boutons 22A, 22B est écoulée. Avantageusement, le minuteur formant l'interface 22 est conçu pour émettre un premier signal (de préférence sonore et/ou visuel) signalant à l'utilisateur l'atteinte de la pression de fonctionnement (et l'invitant en conséquence à réduire la puissance délivrée par la source de chauffe) puis un deuxième signal signalant à l'utilisateur que la durée de cuisson sous pression qu'il avait programmée est écoulée (et l'invitant en conséquence à couper la source de chauffe).

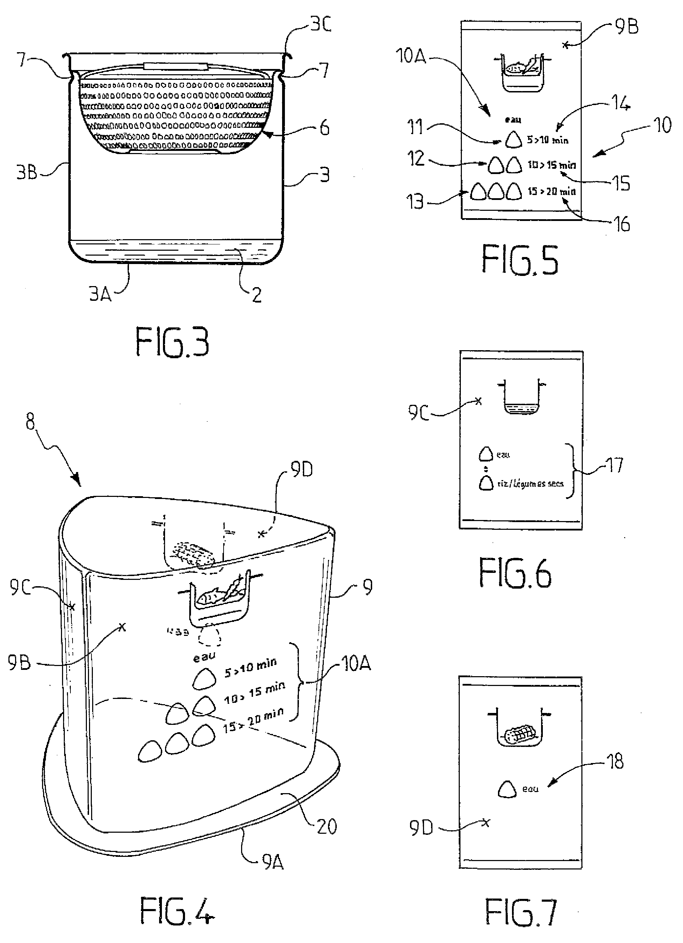

Comme illustré aux figures 1, 3 et 9, l'appareil 1 comprend avantageusement un panier 6 destiné à être disposé dans la cuve 3 pour y accueillir les aliments à cuire. Le panier 6 peut être de tout type connu, et par exemple de type *« filet »*, c'est-à-dire obtenu à l'aide de fils d'acier entrelacés ou maillés et pourvus d'une structure de rigidification leur permettant une certaine tenue mécanique, ou de type *« embout ».* Dans ce dernier cas, qui correspond aux exemples illustrés aux figures, le panier 6 est obtenu par emboutissage d'un flan métallique comportant une série de perforations ménagées à travers son épaisseur. Le panier 6 est destiné à être inséré dans la cuve 3 et à être supporté dans ladite cuve 3 à distance du fond 3A, comme illustré à la figure 3. A cet effet, il est par exemple connu de recourir à des déformations centripètes localisées 7 ménagées dans la paroi latérale 3B de la cuve 3 pour former un support pour le bord périphérique libre 6A du panier. Ce dernier se trouve ainsi suspendu au-dessus du fond 3A, à distance de ce dernier.

Dans ce mode d'utilisation de l'appareil 1, qui implique donc la mise en oeuvre du panier 6, il est nécessaire d'introduire dans la cuve 3 un liquide de cuisson 2, qui est généralement constitué par de l'eau ou tout autre liquide adéquat (vin, sauce, etc.). La présence de ce liquide de cuisson 2 a un double objectif, savoir :
- éviter le phénomène de « *chauffe à sec »,*
- et générer de la vapeur destinée à venir traverser le panier 6 (à travers les perforations de ce dernier) pour assurer une cuisson saine, efficace et rapide des aliments contenus dans le panier.

Le recours à un panier 6 de cuisson, s'il s'avère tout à fait indiqué pour la cuisson d'aliments tels que des légumes ou du poisson, n'est bien entendu pas strictement obligatoire. Ainsi, pour assurer la cuisson sous pression de riz ou de légumes secs, un procédé de cuisson par immersion pourra être mis en oeuvre. Une telle cuisson par immersion consiste à ne pas utiliser de panier, et à verser directement dans la cuve 3 le riz (ou les légumes secs) et le liquide de cuisson. De même, pour effectuer un rissolage d'une pièce de viande sous pression, il suffit de placer directement la pièce de viande dans la cuve 3 sur le fond de cette dernière, et de verser là encore directement dans la cuve 3 le liquide de cuisson.

Le risque de chauffe à sec dans ces deux derniers cas de figure (cuisson par immersion et rissolage) est moindre que lors d'une cuisson en ambiance vapeur avec un panier, dans la mesure où même si tout le liquide de cuisson venait à disparaître (par évaporation), l'aliment (viande, riz ou légumes secs) resterait en contact direct avec le fond de la cuve 3 et absorberait de ce fait une partie au moins de l'énergie thermique, empêchant (ou du moins retardant significativement) la survenance du phénomène de chauffe à sec.

Afin de minimiser ce risque de chauffe à sec, en particulier lors d'une cuisson à l'aide du panier 6, et d'optimiser la durée du cycle de cuisson et la consommation énergétique correspondante, l'appareil 1 de cuisson d'aliments sous pression conforme à l'invention comprend un doseur 8 permettant d'introduire dans la cuve 3 une quantité prédéterminée de liquide de cuisson 2 fonction de la durée prévisionnelle de cuisson des aliments à la pression de fonctionnement. Le doseur 8 a ainsi pour fonction de délivrer, directement ou par intervention de l'utilisateur, une dose de liquide de cuisson 2 qui dépend (par exemple exclusivement) de la durée de cuisson à la pression de fonctionnement des aliments envisagée par l'utilisateur préalablement au lancement du cycle de cuisson.

Cette quantité prédéterminée de liquide de cuisson 2, introduite dans la cuve 3 à l'aide du doseur 8 préalablement à la montée en température et/ou en pression de l'appareil 1 (c'est-à-dire préalablement au lancement du cycle de cuisson) d'une part est suffisante pour éviter sensiblement toute chauffe à sec pendant un cycle de cuisson sous pression dont la durée correspond à la durée prévisionnelle (même si la puissance de chauffe reste maximale pendant tout le cycle de cuisson) et d'autre part permet de minimiser la durée de préchauffage (c'est-à-dire de la montée en température et en pression de l'autocuiseur jusqu'à sa pression de fonctionnement) et la consommation énergétique afférente.

Le doseur 8 permet ainsi d'introduire dans la cuve 3 la quantité de liquide de cuisson 2 qui est juste nécessaire pour éviter la survenance d'une chauffe à sec pendant le cycle de cuisson tel qu'envisagé par l'utilisateur. La tâche de ce dernier est grandement facilitée par le doseur 8, puisque l'utilisateur n'a pas à se préoccuper d'une multitude de paramètres interdépendants et n'a finalement besoin que la durée prévisionnelle de cuisson à la pression de fonctionnement pour introduire dans la cuve 3 une quantité optimisée de liquide de cuisson 2. En d'autres termes, le doseur 8 est conçu pour d'une part permettre à l'utilisateur de déterminer une quantité de liquide de cuisson à partir d'une durée prévisionnelle de cuisson des aliments à la pression de fonctionnement de l'appareil, et d'autre part de déverser cette quantité de liquide dans la cuve 3. Le doseur 8 est donc conçu pour opérer un dosage en fonction de la durée prévisionnelle de cuisson des aliments à la pression de fonctionnement.

Bien entendu, la quantité prédéterminée de liquide de cuisson 2 dosée à l'aide du doseur 8 peut être associée à un mode de cuisson particulier (par exemple cuisson en panier) et/ou à un niveau de pression de fonctionnement spécifique. Dans ce cas, le doseur 8 permet d'introduire dans la cuve 3 une quantité prédéterminée de liquide de cuisson 2 qui est fonction de la durée prévisionnelle de cuisson à la pression de fonctionnement des aliments pour un mode de cuisson (et/ou un niveau de pression de fonctionnement, dans le cas d'un régulateur réglable du genre soupape à tarage réglable) donné. En pratique, le doseur 8 est par exemple essentiellement destiné à permettre le dosage de liquide de cuisson 2 pour une cuisson des aliments dans un panier 6 suspendu dans la cuve 3. Ainsi, dans ce mode de réalisation, le doseur 8 est conçu pour être mis en oeuvre de préférence dans certaines conditions de fonctionnement de l'appareil 1 (impliquant par exemple utilisation d'un panier 6). De manière générale, il est également envisageable que le doseur 8 permette d'introduire dans la cuve 3 une quantité prédéterminée de liquide de cuisson 2 qui est fonction non seulement de la durée prévisionnelle de cuisson à la pression de fonctionnement des aliments mais également d'au moins un autre paramètre, comme par exemple le niveau de pression de fonctionnement, la nature des aliments, la masse de ces derniers, etc.

Avantageusement, comme illustré aux figures, le doseur 8 comprend un récipient 9 distinct de la cuve 3. De préférence, le récipient 9 est ainsi totalement indépendant des autres éléments constitutifs de l'appareil 1 de cuisson d'aliments sous pression, et en particulier de la cuve 3, du panier 6 et du couvercle 4. Le récipient 9 est avantageusement conçu pour être saisi et manipulé à la main par un utilisateur. Cela signifie que le récipient 9 formant le doseur 8 est suffisamment léger et de dimensions suffisamment réduites pour pouvoir être tenu et déplacé à la main par l'utilisateur, y compris lorsque le récipient 9 est rempli de liquide.

Avantageusement, le récipient 9 présente une contenance prédéterminée correspondant à une mesure de liquide. Cette mesure de liquide est avantageusement choisie pour correspondre à la quantité minimale nécessaire pour effectuer une cuisson à la pression de fonctionnement de durée minimale (par exemple de l'ordre de 5 minutes) avec l'appareil 1 concerné, sans survenance de chauffe à sec. Dans ce cas, la mesure est par exemple d'environ 200 mL, c'est-à-dire que la contenance prédéterminée du récipient 9 (qui correspond à une mesure de liquide) est d'environ 200 mL. Bien évidemment, la valeur de cette contenance prédéterminée est adaptable en fonction des autres caractéristiques de l'appareil 1, et notamment en fonction du volume de ce dernier, de son niveau de pression de fonctionnement (imparti par sa soupape de régulation de pression) de la structure et de la composition de la cuve 3, et en particulier du fond 3A de cette dernière.

Afin de permettre à l'utilisateur d'introduire dans la cuve 3 une quantité prédéterminée de liquide de cuisson 2 fonction de la durée prévisionnelle de cuisson des aliments à la pression de fonctionnement, le doseur 8 comprend en outre un moyen de détermination 10 du nombre de mesures de liquide de cuisson 2 à introduire dans la cuve 3 en fonction de la durée prévisionnelle de cuisson des aliments à la pression de fonctionnement.

Le moyen de détermination 10 permet ainsi à l'utilisateur, sur la base de la connaissance par ce dernier de la durée prévisionnelle de cuisson des aliments à la pression de fonctionnement, de déterminer un nombre, de préférence entier, de mesures de liquide de cuisson 2 à introduire à l'aide du récipient 9 dont la capacité correspond à une mesure de liquide.

Cette conception présente notamment les avantages suivants :
- Elle permet de minimiser la taille du récipient 9, de sorte que ce dernier peut ainsi être plus facilement intégré dans l'appareil 1. Cet avantage découle du choix de recourir à un récipient 9 dont la capacité forme une mesure de liquide, charge à l'utilisateur d'introduire dans la cuve 3 le nombre adéquat de mesures de liquide en fonction des informations obtenues grâce au moyen de détermination 10.
- L'utilisation du doseur 8 est extrêmement simple et ne demande aucune aptitude ou compétence particulière. Il suffit en effet à l'utilisateur de remplir sensiblement intégralement le récipient 9 pour obtenir ainsi une mesure de liquide, sans avoir à utiliser le moindre instrument de nature ostentatoirement technique (du genre échelle graduée par exemple).
- Le recours à un récipient 9 formant une mesure de liquide permet également de simplifier le moyen de détermination 10, notamment lorsqu'il se présente sous la forme d'une table de correspondance graphique comme illustré à la figure 5. En effet, cela évite de faire apparaître sur la table de correspondance en question des unités de volume (mL, cm³, ou autres) qui pourraient compliquer la tâche de l'utilisateur et entraîner des erreurs d'utilisation.

Bien entendu, le recours à un récipient 9 dont la contenance prédéterminée correspond à une mesure de liquide ne constitue qu'un mode de réalisation, certes particulièrement avantageux, parmi d'autres. Il est ainsi tout à fait envisageable que le récipient 9 ne constitue pas une mesure de liquide et soit plutôt équipé d'une échelle graduée établissant par exemple une correspondance entre quantité de liquide contenue dans le récipient 9 et durée prévisionnelle de cuisson à la pression de fonctionnement. Dans ce cas, le récipient 9 est toutefois nécessairement plus encombrant, ce qui peut constituer un inconvénient.

Comme évoqué précédemment, le moyen de détermination 10 du nombre de mesures de liquide de cuisson 2 à introduire dans la cuve 3 en fonction de la durée prévisionnelle de cuisson des aliments à la pression de fonctionnement comprend avantageusement une table de correspondance 10A (illustrée à la figure 5), de préférence de nature graphique, entre des nombres entiers 11, 12, 13 de mesures de liquide de cuisson 2 et des plages 14, 15, 16 de durée prévisionnelle de cuisson des aliments à la pression de fonctionnement. Dans l'exemple illustré à la figure 5, chaque nombre entier de mesure 11, 12, 13 est illustré par un symbole graphique (en l'espèce un triangle aux faces légèrement arrondies, représentatif de la section du récipient 9 illustré à la figure 4). Ainsi, à la lecture de la table de correspondance 10A illustrée à la figure 5, l'utilisateur comprend qu'il doit introduire dans la cuve 3 une mesure de liquide pour une durée prévisionnelle de cuisson des aliments à la pression de fonctionnement comprise entre 5 et 10 minutes, deux mesures de liquide pour une durée prévisionnelle de cuisson des aliments à la pression de fonctionnement comprise sensiblement entre 10 et 15 minutes, et trois mesures de liquide pour une durée prévisionnelle de cuisson des aliments à la pression de fonctionnement comprise entre sensiblement 15 et 20 minutes. Bien entendu, il est tout à fait envisageable que la table de correspondance 10A prévoit plus de trois plages de durée prévisionnelle de cuisson comme illustré, et par exemple quatre plages de durée prévisionnelle de cuisson correspondant respectivement à une, deux, trois et quatre mesures de liquide.

La table de correspondance 10A constitue ainsi un moyen de détermination 10 graphique extrêmement simple à comprendre et à utiliser. Cette table de correspondance 10A est avantageusement inscrite sur le récipient 9, comme illustré à la figure 4, de sorte que l'utilisateur n'a besoin d'aucun élément additionnel autre que le récipient 9 pour introduire une quantité optimale de liquide de cuisson 2 dans la cuve 3. Il est cependant tout à fait envisageable, sans pour autant que l'on sorte du cadre de l'invention, que le moyen de détermination 10 se présente sous une forme autre que celle d'une table de correspondance graphique. Par exemple, le moyen de détermination 10 peut comprendre à titre alternatif une unité de traitement automatique (électronique et/ou informatique) permettant à l'utilisateur de saisir une valeur de durée prévisionnelle de cuisson à la pression de fonctionnement (par exemple à l'aide d'un clavier ou de boutons d'incrémentation/décrémentation). Cette unité de traitement automatique est conçue pour retourner (par exemple par affichage sur un écran), en réponse à la valeur de durée saisie par l'utilisateur, le nombre de mesures de liquide de cuisson 2 à introduire dans la cuve 3.

Avantageusement, et conformément au mode de réalisation des figures 4 à 7, le récipient 9 formant doseur 8 comprend un fond 9A à partir duquel s'élève une paroi latérale formée d'une pluralité de facettes 9B, 9C, 9D. Par exemple, dans les modes de réalisation illustrés aux figures 4 à 7, 10 et 11, le récipient 9 comprend un fond 9A sensiblement plat et de forme globalement triangulaire (avec les côtés du triangle légèrement cintrés pour le mode de réalisation des figures 4 à 7), la paroi latérale présentant également une section sensiblement triangulaire formée par trois facettes 9B, 9C, 9D réalisées de préférence en un matériau sensiblement transparent, par exemple en verre ou en matière plastique.

Avantageusement, la table de correspondance 10A est portée (par impression, gravure ou autre) par l'une des facettes 9B. Les deux autres facettes 9C, 9D peuvent également porter des marquages. Par exemple, comme dans le mode de réalisation des figures 4 à 7, chaque facette 9B, 9C, 9D peut être dédiée à l'un des trois modes de cuisson (cuisson vapeur avec panier, cuisson par immersion et cuisson par rissolage) susceptibles d'être habituellement mis en oeuvre dans un autocuiseur. Ainsi, une première facette 9B, dédiée à la cuisson avec panier, comporte la table de correspondance 10A sur sa paroi externe, de manière à être visible par l'utilisateur, tandis qu'une deuxième facette adjacente 9C, dédiée à la cuisson par immersion, comporte un marquage 17 incitant l'utilisateur à introduire une mesure d'eau pour une mesure de riz ou de légumes secs, une troisième facette 9D, dédiée au rissolage, comportant également un marquage 18 rappelant à l'utilisateur d'introduire un liquide de cuisson pour accompagner la pièce de viande à cuire, par exemple selon une quantité correspondant à une mesure.

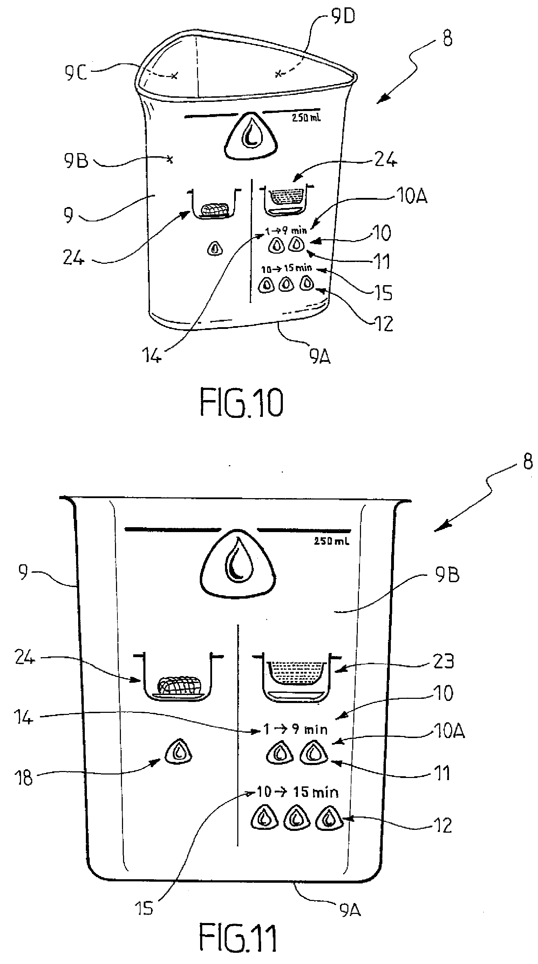

Le mode de réalisation illustré aux figures 10 et 11 est toutefois préféré. Dans ce mode de réalisation, seule l'une des facettes 9B du récipient 9 porte des marquages, les deux autres facettes 9C, 9D étant avantageusement vierges, afin de faciliter la compréhension de l'utilisateur. Afin de simplifier encore plus la compréhension et l'utilisation du récipient 9, ce dernier repose avantageusement sur le concept général suivant, correspondant à la variante des figures 10 et 11 :
- deux cas de cuisson sont envisagés : l'un avec panier 6 (cuisson vapeur) et l'autre sans panier (cuisson rissolée), chacun de ces modes étant illustré par un pictogramme correspondant 23, 24 ; pour les autres types de cuisson (soupes, légumes, etc.) nécessitant un important volume d'eau (sans panier), l'utilisateur se référera à un livret de cuisson ou à toute autre source d'information ;
- le pictogramme 24 correspondant à la cuisson sans panier (rissolée) est par exemple associé à un marquage 18 rappelant à l'utilisateur d'introduire un liquide de cuisson pour accompagner la pièce de viande à cuire, de préférence selon une quantité correspondant à une mesure ;
- le pictogramme 23 est quant à lui associé à une table de correspondance 10A, laquelle se base sur le principe suivant : pour un temps de cuisson à un chiffre (entre 1 et 9 minutes), il convient d'introduire deux doses, tandis que pour un temps de cuisson à deux chiffres (entre 10 et 15 minutes), il convient d'introduire trois doses.

Le récipient 9 constitue ainsi un accessoire multifonctions extrêmement simple et pratique pour l'utilisateur, qui lui permet de bénéficier d'un compromis optimal, ou du moins maîtrisé, entre le risque de chauffe à sec d'une part et le temps de cuisson et la consommation énergétique d'autre part.

Avantageusement, et comme illustré aux figures, l'appareil 1 conforme à l'invention comprend un logement dans lequel le récipient 9 est destiné à être inséré pour y être rangé lorsqu'il n'est pas utilisé. Conformément au mode de réalisation des figures 1 à 7, ce logement est avantageusement situé sur le couvercle 4. Par exemple, l'appareil 1 comprend un pommeau 19 monté sur le couvercle 4 et dans lequel est ménagé le logement destiné à accueillir le récipient 9. Le pommeau 19 fait avantageusement saillie du centre de la face externe du couvercle 4. Il est par exemple conçu pour permettre la préhension manuelle, par son intermédiaire, du couvercle 4 par l'utilisateur. Ce pommeau 19 peut également éventuellement servir de moyen de commande du verrouillage/déverrouillage des mâchoires 5, et à ce titre accueillir des boutons poussoir et/ou être monté à rotation selon un axe vertical pour se déplacer entre différentes positions de commande. Dans le mode de réalisation illustré notamment aux figures 1 et 2, le pommeau 19 est ainsi pourvu d'une cavité dont la forme est sensiblement complémentaire de celle du récipient 9, lequel peut ainsi être enfilé verticalement dans la cavité en question formant logement de rangement.

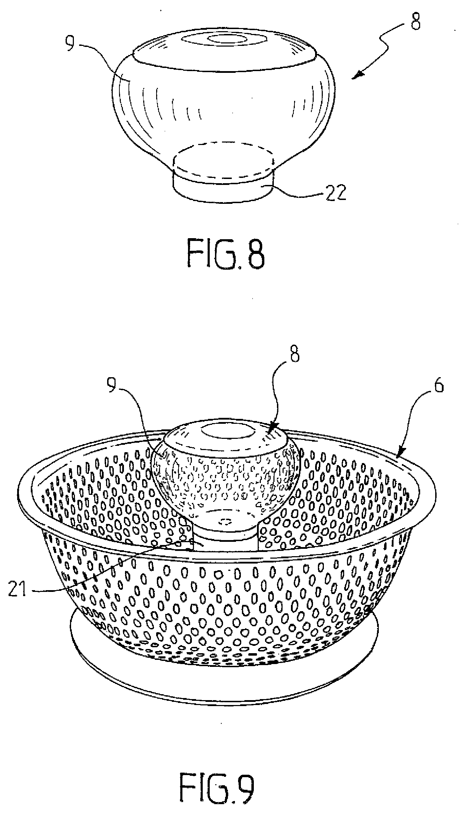

Une fois inséré en configuration de rangement dans le logement ménagé dans le pommeau 19, seule la face externe du fond 9A est apparente pour l'utilisateur et constitue pour ce dernier un moyen de préhension facilitant l'extraction du récipient 9 hors de son logement. A cet égard, il est avantageux de prévoir un fond 9A qui déborde latéralement de la paroi latérale, pour former un rebord 20 susceptible d'une part de faciliter la préhension du récipient par l'utilisateur, en vue notamment d'extraire le récipient 9 hors de son logement, et d'autre part de constituer une butée d'arrêt lorsque le récipient 9 est enfilé dans le logement ménagé dans le pommeau 19. Il convient par ailleurs de noter que le recours à un récipient 9 dont la paroi latérale est formée d'une pluralité de facettes 9B, 9C, 9D permet d'éviter toute rotation intempestive du récipient 9 dans son logement. Bien entendu, le recours à un logement de rangement du récipient 9 ménagé dans une pièce constitutive de l'appareil 1 n'est pas forcément nécessaire. Il est par exemple tout à fait envisageable que le récipient 9 soit simplement livré « *en vrac »* avec le reste de l'appareil 1, charge à l'utilisateur de le ranger où bon lui semble. D'autres systèmes de rangement intégrés à l'appareil 1 sont par ailleurs envisageables. Ainsi, dans le mode de réalisation illustré aux figures 8 et 9, le panier 6 et le récipient 9 (qui présente en l'espèce une forme de révolution) sont pourvus de moyens complémentaires de fixation permettant la fixation amovible du récipient 9 sur le panier 6, comme illustré à la figure 9.

Le récipient 9 peut ainsi être clipsé et déclipsé à volonté sur le panier 6, lequel comprend un port de fixation se présentant par exemple sous la forme d'une colonne centrale 21 issue du fond du panier 6. Avantageusement, les moyens complémentaires de fixation permettant la fixation amovible du récipient 9 sur le panier 6 comprennent un bouchon 22 qui ferme le récipient 9 et qui est conçu pour être clipsé au sommet de la colonne 21, comme illustré à la figure 9. L'utilisateur peut ainsi facilement remplir au robinet le récipient 9, en ayant enlevé au préalable le bouchon 22, puis reboucher le récipient 9 à l'aide du bouchon 22 et clipser le récipient 9 sur la colonne centrale 21 par l'intermédiaire du bouchon 22. Avantageusement, le bouchon 22 est percé d'un orifice de dimensions réduites qui permet l'écoulement dans la cuve 3 du liquide contenu dans le récipient 9, via l'intérieur de la colonne 21. Le récipient 9, qui forme alors un sous-ensemble unitaire avec le panier 6, peut rester au sein de la cuve 3 pendant tout le cycle de cuisson. Il est même envisageable, dans un mode de réalisation un peu plus élaboré, que la colonne centrale 21 soit pourvue d'un dispositif d'actionnement du bouchon 22 permettant de contrôler l'échappement du liquide contenu dans le récipient 9 hors de ce dernier par l'intermédiaire de l'orifice pratiqué dans le bouchon 22. Par exemple, la colonne 21 peut à cet effet être pourvue d'un pointeau coopérant avec une soupape portée par le bouchon 22, de façon à ce que le pointeau ouvre ladite soupape et libère ainsi le liquide contenu dans le récipient 9 lorsque ce dernier est rapporté et fixé de manière amovible sur le panier 6.

Dans ce qui précède, il a été envisagé, en relation avec les modes de réalisation illustrés aux figures, un doseur 8 constitué d'un récipient 9 indépendant et destiné à être manipulé, rempli et vidé à la main par l'utilisateur. Il est cependant tout à fait envisageable, dans un mode de réalisation alternatif non illustré aux figures, que le doseur 8 comprenne un réservoir annexe relié, de façon permanente ou non, à la cuve 3 par un système d'alimentation comprenant par exemple une conduite et une pompe. L'apport de liquide de cuisson 2 dans la cuve 3 se fait alors par activation de la pompe qui transfère une quantité prédéterminée de liquide de cuisson 2 du réservoir annexe dans la cuve 3, par l'intermédiaire de la conduite. Ce mode de réalisation peut d'ailleurs être amélioré lorsque l'appareil 1 est pourvu d'une interface 22 permettant à l'utilisateur de saisir une durée de cuisson des aliments sous pression. Bien entendu, la durée saisie par l'utilisateur à l'aide de l'interface 22 correspond dans ce cas à la durée prévisionnelle de cuisson à la pression de fonctionnement qui est utilisée pour doser, à l'aide du doseur 8, la quantité de liquide de cuisson 2 à introduire dans la cuve 3 préalablement à la cuisson. Dans ce cas, le doseur 8 est relié à l'interface 22 pour alimenter automatiquement la cuve 3 d'une quantité de liquide de cuisson 2 prédéterminée fonction de la durée de cuisson saisie par l'utilisateur à l'aide de l'interface 22. A cette fin, l'interface 22 est avantageusement pourvue d'un moyen de traitement qui :
- détermine une quantité prédéterminée de liquide en fonction de la durée de cuisson des aliments à la pression de fonctionnement, ladite quantité de liquide étant prédéterminée pour éviter une chauffe à sec,
- commande ensuite la pompe pour alimenter, par l'intermédiaire de la conduite, la cuve 3 en liquide de cuisson selon la quantité déterminée auparavant.

L'invention concerne bien entendu en tant que tel un doseur 8 pour un appareil 1 de cuisson sous pression conforme à la description qui précède. Comme exposé précédemment, le doseur 8 est conçu pour permettre l'introduction dans la cuve 3 d'une quantité prédéterminée de liquide de cuisson 2 fonction de la durée prévisionnelle de cuisson des aliments à la pression de fonctionnement. A cette fin et comme expliqué dans ce qui précède, le doseur 8 est avantageusement pourvu d'un moyen permettant la détermination d'une quantité de liquide de cuisson 2 à introduire dans la cuve 3 en fonction de la durée prévisionnelle de cuisson des aliments à la pression de fonctionnement, ce moyen consistant de préférence en le moyen de détermination 10 décrit ci-avant.

L'invention concerne également en tant que tel un système comprenant d'une part un appareil 1 conforme à la description qui précède, et d'autre part un support d'information (non illustré) présentant des recettes de cuisine utilisant l'appareil 1, ledit support d'information indiquant pour au moins l'une desdites recettes le nombre de mesures de liquide de cuisson 2 à introduire dans la cuve 3, à l'aide du doseur 8. De préférence, ce nombre de mesures est illustré sur le support d'information par un symbole graphique tel que celui employé à la figure 5. Par exemple, une recette de poulet basquaise présentée par le support d'information pourrait indiquer à l'utilisateur qu'il faut introduire dans la cuve 3 deux mesures d'eau, une mesure de vin blanc et une mesure de bouillon de volaille, chaque nombre de mesures étant illustré par un nombre correspondant dudit symbole graphique. Il existe ainsi, dans ce mode avantageux de réalisation, un code visuel très facilement identifiable entre le doseur 8 et le support d'information, rendant beaucoup plus facile la tâche de l'utilisateur, et permettant d'obtenir un résultat optimal. De préférence, le support d'information est constitué par un support imprimé, formant par exemple un livret de recettes. Dans ce mode de réalisation préférentiel, le système conforme à l'invention comprend donc une cuve 3 et un couvercle 4, un doseur 8 et un livret de recettes. Des nombres entiers de mesures de liquide de cuisson 2, de préférence représentés par des symboles graphiques, sont avantageusement représentés d'une part sur le doseur 8 et d'autre part sur le livret de recettes pour établir un lien direct et intuitif entre tous les composants du système. Bien entendu, le nombre de mesures de liquide indiqué sur le livret de recette sera cohérent avec le temps de cuisson sous pression (à la pression de fonctionnement) indiqué par ce même livret pour la recette en question.

L'invention concerne par ailleurs en tant que tel un procédé de cuisson d'aliments sous pression en présence d'un liquide de cuisson 2, susceptible d'être mis en oeuvre à l'aide de l'appareil 1, ledit procédé comprenant une étape (i) d'introduction dans une cuve 3 des aliments à cuire, une étape (ii) d'introduction dans ladite cuve 3 du liquide de cuisson 2 et une étape (iii) de cuisson des aliments à une valeur de pression de consigne, dite pression de fonctionnement. Au cours de cette étape (ii) d'introduction du liquide de cuisson 2, et comme exposé précédemment en ce qui concerne l'appareil 1, une quantité prédéterminée de liquide de cuisson 2 fonction de la durée prévisionnelle de cuisson des aliments à la pression de fonctionnement est introduite dans la cuve 3 à l'aide d'un doseur 8, de préférence conforme à la description qui précède. En d'autres termes, l'étape (ii) consiste avantageusement à introduire dans la cuve 3, à l'aide du doseur 8 conçu à cet effet, une quantité prédéterminée de liquide de cuisson 2 fonction de la durée prévisionnelle de l'étape (iii).

En définitive, l'invention permet de façon extrêmement simple et intuitive d'obtenir d'excellentes performances énergétiques pour un prix de revient extrêmement réduit. Ainsi, le préchauffage (phase de chauffe nécessaire pour atteindre la pression de fonctionnement de l'autocuiseur) d'un autocuiseur dont la cuve 3 contient 200 mL d'eau à l'aide d'une plaque à induction (réglée sur une puissance de 2 000 W) s'effectue en 1 minute et 50 secondes. Cette durée était de 4 minutes pour le volume d'eau de 750 mL classiquement recommandé dans l'art antérieur, toutes choses égales par ailleurs. Le recours à un ustensile très simple tel que le doseur 8 permet ainsi dans ce cas d'économiser 56 % de l'énergie consacrée au préchauffage. La combinaison d'un doseur 8 et d'un minuteur 22 (notamment d'un minuteur 22 invitant l'utilisateur à réduire la puissance de chauffe lors de l'atteinte de la pression de fonctionnement, puis à couper la source de chauffe lorsque le temps de cuisson sous pression programmé est écoulé) permet à l'utilisateur d'optimiser de façon extrêmement simple et intuitive le temps de préchauffage et la consommation énergétique correspondante. Par exemple, pour une cuisson de haricots verts devant durer 5 minutes, on obtient avec une mesure de liquide de 200 mL, dosée à l'aide du doseur 8, une cuisson sensiblement deux fois plus rapide et deux fois plus économe en énergie que la même cuisson avec 750 mL d'eau, comme préconisé auparavant.

### POSSIBILITE D'APPLICATION INDUSTRIELLE

L'invention trouve son application industrielle dans la conception, la fabrication et l'utilisation d'appareils de cuisson d'aliments.

## Revendications

1. Appareil (1) de cuisson d'aliments sous pression en présence d'un liquide de cuisson (2), ledit appareil (1) comprenant au moins d'une part une cuve (3) destinée à accueillir les aliments et le liquide de cuisson (2) et d'autre part un régulateur pour maintenir la pression régnant dans la cuve (3) à une valeur de consigne, dite pression de fonctionnement, ledit appareil (1) étant **caractérisé en ce qu'**il comprend en outre un doseur (8) permettant d'introduire dans la cuve (3) une quantité prédéterminée de liquide de cuisson (2) fonction de la durée prévisionnelle de cuisson des aliments à la pression de fonctionnement, ledit doseur (8) comprenant :
- un récipient (9) qui est distinct de la cuve (3) et qui présente une contenance prédéterminée correspondant à une mesure de liquide,
- un moyen de détermination (10) du nombre de mesures de liquide de cuisson (2) à introduire dans la cuve (3) en fonction de la durée prévisionnelle de cuisson des aliments à la pression de fonctionnement, ledit moyen de détermination (10) comprenant une table de correspondance (10A) entre des nombres entiers (11, 12, 13) de mesures de liquide de cuisson (2) et des plages (14, 15, 16) de durée prévisionnelle de cuisson des aliments à la pression de fonctionnement.

2. Appareil (1) selon la revendication 1 **caractérisé en ce que** ledit récipient (9) est conçu pour être saisi et manipulé à la main par un utilisateur.

3. Appareil (1) selon la revendication 1 ou 2 **caractérisé en ce que** ladite table de correspondance (10A) est inscrite sur ledit récipient (9).

4. Appareil (1) selon l'une des revendications 1 à 3 **caractérisé en ce qu'**il comprend un logement dans lequel ledit récipient (9) est destiné à être inséré pour y être rangé lorsqu'il n'est pas utilisé.

5. Appareil (1) selon la revendication 4 **caractérisé en ce qu'**il comprend un couvercle (4) destiné à être rapporté sur la cuve (3), ledit logement étant situé sur le couvercle (4).

6. Appareil (1) selon la revendication 5 **caractérisé en ce qu'**il comprend un pommeau (19) monté sur le couvercle (4) et dans lequel est ménagé ledit logement.

7. Appareil (1) selon l'une des revendications 1 à 6 **caractérisé en ce qu'**il comprend un panier (6) destiné à être disposé dans la cuve (3) pour y accueillir les aliments, lesdits paniers (6) et récipient (9) étant pourvus de moyens complémentaires de fixation permettant la fixation amovible du récipient (9) sur le panier (6).

8. Appareil (1) selon l'une des revendications 1 à 7 **caractérisé en ce qu'**il comprend une interface (22) permettant à un utilisateur de saisir une durée de cuisson des aliments à la pression de fonctionnement.

9. Appareil (1) selon la revendication 8 **caractérisé en ce que** le doseur (8) est relié à l'interface (22) pour alimenter automatiquement la cuve (3) d'une quantité de liquide de cuisson (2) prédéterminée fonction de la durée de cuisson saisie par l'utilisateur à l'aide de l'interface (22).

10. Doseur (8) pour appareil (1) de cuisson sous pression en présence d'un liquide de cuisson (2), ledit appareil (1) comprenant au moins d'une part une cuve (3) destinée à accueillir les aliments et le liquide de cuisson (2) et d'autre part un régulateur pour maintenir la pression régnant dans la cuve (3) à une valeur de consigne, dite pression de fonctionnement, ledit doseur (8) étant **caractérisé en ce qu'**il permet d'introduire dans la cuve (3) une quantité prédéterminée de liquide de cuisson (2) fonction de la durée prévisionnelle de cuisson des aliments à la pression de fonctionnement, ledit doseur (8) comprenant :
- un récipient (9) qui est distinct de la cuve (3) et qui présente une contenance prédéterminée correspondant à une mesure de liquide,
- un moyen de détermination (10) du nombre de mesures de liquide de cuisson (2) à introduire dans la cuve (3) en fonction de la durée prévisionnelle de cuisson des aliments à la pression de fonctionnement, ledit moyen de détermination (10) comprenant une table de correspondance (10A) entre des nombres entiers (11, 12, 13) de mesures de liquide de cuisson (2) et des plages (14, 15, 16) de durée prévisionnelle de cuisson des aliments à la pression de fonctionnement.

11. Système comprenant d'une part un appareil (1) conforme à l'une des revendications 1 à 9 et d'autre part un support d'information présentant des recettes de cuisine utilisant l'appareil (1), ledit support d'information indiquant pour au moins l'une desdites recettes le nombre de mesures de liquide de cuisson (2) à introduire dans la cuve (3).

12. Procédé de cuisson d'aliments sous pression en présence d'un liquide de cuisson (2), ledit procédé comprenant une étape d'introduction dans une cuve (3) des aliments, une étape d'introduction dans ladite cuve (3) du liquide de cuisson (2) et une étape de cuisson des aliments à une valeur de pression de consigne, dite pression de fonctionnement, ledit procédé étant **caractérisé en ce qu'**au cours de ladite étape d'introduction du liquide de cuisson (2), une quantité prédéterminée de liquide de cuisson (2) fonction de la durée prévisionnelle de cuisson des aliments à la pression de fonctionnement est introduite dans la cuve (3) à l'aide d'un doseur (8) comprenant :
- un récipient (9) qui est distinct de la cuve (3) et qui présente une contenance prédéterminée correspondant à une mesure de liquide,
- un moyen de détermination (10) du nombre de mesures de liquide de cuisson (2) à introduire dans la cuve (3) en fonction de la durée prévisionnelle de cuisson des aliments à la pression de fonctionnement, ledit moyen de détermination (10) comprenant une table de correspondance (10A) entre des nombres entiers (11, 12, 13) de mesures de liquide de cuisson (2) et des plages (14, 15, 16) de durée prévisionnelle de cuisson des aliments à la pression de fonctionnement.

## Patentansprüche

1. Gerät (1) zum Kochen von Lebensmitteln unter Druck in Anwesenheit einer Kochflüssigkeit (2), wobei das Gerät (1) mindestens einerseits einen Behälter (3), der dazu bestimmt ist, die Lebensmittel und die Kochflüssigkeit (2) aufzunehmen, und andererseits einen Regler aufweist, um den Druck, der in dem Behälter (3) herrscht, auf einem Sollwert, dem Betriebsdruck, zu halten, wobei das Gerät (1) **dadurch gekennzeichnet ist, dass** es ferner einen Dosierer (8) aufweist, der es ermöglicht, in den Behälter (3) eine vorbestimmte Menge an Kochflüssigkeit (2) in Abhängigkeit von der voraussichtlichen Kochzeit der Lebensmittel bei dem Betriebsdruck einzuführen, wobei der Dosierer (8) Folgendes aufweist:
- ein Gefäß (9), das sich von dem Behälter (3) unterscheidet und das ein vorbestimmtes Fassungsvermögen aufweist, das einem Flüssigkeitsmaß entspricht,
- ein Mittel zum Bestimmen (10) der Anzahl der Kochflüssigkeitsmaße (2), die in den Behälter (3) in Abhängigkeit von der voraussichtlichen Kochzeit der Lebensmittel bei dem Betriebsdruck einzuführen sind, wobei das Mitte! zum Bestimmen (10) eine Tabelle der Entsprechung (10A) zwischen ganzen Zahlen (11, 12, 13) von Kochflüssigkeitsmaßen (2) und Bereichen (14, 15, 16) der voraussichtlichen Kochzeit der Lebensmittel bei dem Betriebsdruck aufweist.

2. Gerät (1) nach Anspruch 1, **dadurch gekennzeichnet, dass** das Gefäß (9) konzipiert ist, um von einem Benutzer mit der Hand gegriffen und bedient zu werden.

3. Gerät (1) nach Anspruch 1 oder 2, **dadurch gekennzeichnet, dass** die Tabelle der Entsprechung (10A) auf dem Gefäß (9) vermerkt ist.

4. Gerät (1) nach einem der Ansprüche 1 bis 3, **dadurch gekennzeichnet, dass** es eine Aufnahme aufweist, in die das Gefäß (9) bestimmt ist, eingefügt zu werden, um dort verstaut zu sein, wenn es nicht verwendet wird.

5. Gerät (1) nach Anspruch 4, **dadurch gekennzeichnet, dass** es einen Deckel (4) aufweist, der dazu bestimmt ist, auf den Behälter (3) aufgebracht zu werden, wobei die Aufnahme auf dem Deckel (4) angeordnet ist.

6. Gerät (1) nach Anspruch 5, **dadurch gekennzeichnet, dass** es einen Knauf (19) aufweist, der auf dem Deckel (4) montiert ist und in dem die Aufnahme ausgebildet ist.

7. Gerät (1) nach einem der Ansprüche 1 bis 6, **dadurch gekennzeichnet, dass** es einen Korb (6) aufweist, der dazu bestimmt ist, in dem Behälter (3) angeordnet zu werden, um die Lebensmittel aufzunehmen, wobei der Korb (6) und das Gefäß (9) mit komplementären Befestigungsmitteln ausgestattet sind, die das abnehmbare Befestigen des Gefäßes (9) auf dem Korb (6) ermöglichen.

8. Gerät (1) nach einem der Ansprüche 1 bis 7, **dadurch gekennzeichnet, dass** es eine Schnittstelle (22) aufweist, die es einem Benutzer ermöglicht, eine Kochzeit der Lebensmittel bei dem Betriebsdruck einzugeben.

9. Gerät (1) nach Anspruch 8, **dadurch gekennzeichnet, dass** der Dosierer (8) mit der Schnittstelle (22) verbunden ist, um dem Behälter (3) eine Menge an Kochflüssigkeit (2) automatisch zuzuführen, die in Abhängigkeit von der Kochzeit, die von dem Benutzer mit Hilfe der Schnittstelle (22) eingegeben wird, vorbestimmt ist.

10. Dosierer (8) für ein Gerät (1) zum Kochen von Lebensmitteln unter Druck in Anwesenheit einer Kochflüssigkeit (2), wobei das Gerät (1) mindestens einerseits einen Behälter (3), der dazu bestimmt ist, die Lebensmittel und die Kochflüssigkeit (2) aufzunehmen, und andererseits einen Regler aufweist, um den Druck, der in dem Behälter (3) herrscht, auf einem Sollwert, dem Betriebsdruck, zu halten, wobei der Dosierer (8) **dadurch gekennzeichnet ist, dass** er es ermöglicht, in den Behälter (3) eine vorbestimmte Menge an Kochflüssigkeit (2) in Abhängigkeit von der voraussichtlichen Kochzeit der Lebensmittel bei dem Betriebsdruck einzuführen, wobei der Dosierer (8) Folgendes aufweist:
- ein Gefäß (9), das sich von dem Behälter (3) unterscheidet und das ein vorbestimmtes Fassungsvermögen aufweist, das einem Flüssigkeitsmaß entspricht,
- ein Mittel zum Bestimmen (10) der Anzahl der Kochflüssigkeitsmaße (2), die in den Behälter (3) in Abhängigkeit von der voraussichtlichen Kochzeit der Lebensmittel bei dem Betriebsdruck einzuführen sind, wobei das Mittel zum Bestimmen (10) eine Tabelle der Entsprechung (10A) zwischen ganzen Zahlen (11, 12, 13) von Kochflüssigkeitsmaßen (2) und Bereichen (14, 15, 16) der voraussichtlichen Kochzeit der Lebensmittel bei dem Betriebsdruck aufweist.

11. System, umfassend einerseits ein Gerät (1) in Konformität mit einem der Ansprüche 1 bis 9 und andererseits einen Informationsträger, der Kochrezepte aufweist, die das Gerät (1) verwenden, wobei der Informationsträger für mindestens eines der Rezepte die Anzahl der Kochflüssigkeitsmaße (2), die in den Behälter (3) einzuführen sind, angibt.

12. Verfahren zum Kochen von Lebensmitteln unter Druck in Anwesenheit einer Kochflüssigkeit (2), wobei das Verfahren einen Schritt des Einführens der Lebensmittel in einen Behälter (3), einen Schritt des Einführens der Kochflüssigkeit (2) in den Behälter (3) und einen Schritt des Kochens der Lebensmittel bei einem Solldruckwert, dem Betriebsdruck, aufweist, wobei das Verfahren **dadurch gekennzeichnet ist, dass** im Laufe des Schrittes des Einführens der Kochflüssigkeit (2) eine vorbestimmte Menge an Kochflüssigkeit (2) in Abhängigkeit von der voraussichtlichen Kochzeit der Lebensmittel bei dem Betriebsdruck in den Behälter (3) mittels eines Dosierers (8) eingeführt wird, der Folgendes aufweist:
- ein Gefäß (9), das sich von dem Behälter (3) unterscheidet und das ein vorbestimmtes Fassungsvermögen aufweist, das einem Flüssigkeitsmaß entspricht,
- ein Mittel zum Bestimmen (10) der Anzahl der Kochflüssigkeitsmaße (2), die in den Behälter (3), die in Abhängigkeit von der voraussichtlichen Kochzeit der Lebensmittel bei dem Betriebsdruck einzuführen sind, wobei das Mittel zum Bestimmen (10) eine Tabelle der Entsprechung (10A) zwischen ganzen Zahlen (11, 12, 13) von Kochflüssigkeitsmaßen (2) und Bereichen (14, 15, 16) der voraussichtlichen Kochzeit der Lebensmittel bei dem Betriebsdruck aufweist.

## Claims

1. An appliance (1) for pressure cooking food in the presence of a cooking liquid (2), said appliance (1) comprising at least, on the one hand, a pot (3) intended to receive the food and the cooking liquid (2) and, on the other hand, a regulator to keep the pressure in the pot (3) at a set value, called the operating pressure, said appliance (1) being **characterized in that** it further comprises a metering device (8) for introducing into the pot (3) a predetermined quantity of cooking liquid (2) depending on the estimated food cooking time at the operating pressure, said metering device (8) comprising :
- a container (9) distinct from the pot (3) and having a predetermined capacity corresponding to a measure of liquid,
- a means (10) for determining the number of measures of cooking liquid (2) to be introduced into the pot (3) as a function the estimated food cooking time at the operating pressure, said determination means (10) comprising a look-up table (10A) showing a correspondence between integral numbers (11, 12, 13) of measures of cooking liquid (2) and ranges (14, 15, 16) of estimated cooking time of the food at the operating pressure.

2. The appliance (1) according to claim 1, **characterized in that** said container (9) is adapted to be manually grasped and handled by a user.

3. The appliance (1) according to claim 1 or 2, **characterized in that** said look-up table (10A) is written on said container (9).

4. The appliance (1) according to one of claims 1 to 3, **characterized in that** it comprises a compartment into which said container (9) is intended to be inserted so as to be stored when not in use.

5. The appliance (1) according to claim 4, **characterized in that** it comprises a cover (4) intended to be placed on the pot (3), said compartment being located on the cover (4).

6. The appliance (1) according to claim 5, **characterized in that** it comprises a knob (19) mounted on the cover (4) and in which is provided said compartment.

7. The appliance (1) according to one of claims 1 to 6, **characterized in that** it comprises a basket (6) intended to be placed in the pot (3) to receive the food, said basket (6) and container (9) being provided with complementary fastening means for the removable fastening of the container (9) to the basket (6).

8. The appliance (1) according to one of claims 1 to 7, **characterized in that** it comprises an interface (22) enabling a user to input a food cooking time at the operating pressure.

9. The appliance (1) according to claim 8, **characterized in that** the metering device (8) is linked to the interface (22) to automatically supply the pot (3) with a predetermined quantity of cooking liquid (2) depending on the cooking time input by the user using the interface (22).

10. A metering device (8) for an appliance (1) for pressure cooking food in the presence of a cooking liquid (2), said appliance (1) comprising at least, on the one hand, a pot (3) intended to receive the food and the cooking liquid (2) and, on the other hand, a regulator to keep the pressure in the pot (3) at a set value, called the operating pressure, said metering device (8) being **characterized in that** it makes it possible to introduce into the pot (3) a predetermined quantity of cooking liquid (2) depending on the estimated food cooking time at the operating pressure, said metering device (8) comprising:
- a container (9) distinct from the pot (3) and having a predetermined capacity corresponding to a measure of liquid,
- a means (10) for determining the number of measures of cooking liquid (2) to be introduced into the pot (3) as a function the estimated food cooking time at the operating pressure, said determination means (10) comprising a look-up table (10A) showing a correspondence between integral numbers (11, 12, 13) of measures of cooking liquid (2) and ranges (14, 15, 16) of estimated cooking time of the food at the operating pressure.

11. A system comprising, on the one hand, an appliance (1) according to any one of claims 1 to 9, and on the other hand, an information medium presenting cooking recipes using the appliance (1), said information medium indicating for at least one of said recipes the number of measures of cooking liquid (2) to be introduced in the pot (3).

12. A method for pressure cooking food in the presence of a cooking liquid (2), said method comprising a step of introducing the food to be cooked into a pot (3), a step of introducing the cooking liquid (2) into said pot (3), and a step of cooking the food at a set pressure value, called the operating pressure, said method being **characterized in that**, during said step of introducing the cooking liquid (2), a predetermined quantity of cooking liquid (2) depending of the estimated food cooking time at the operating pressure is introduced into the pot (3) by means of a metering device (8) comprising:
- a container (9) distinct from the pot (3) and having a predetermined capacity corresponding to a measure of liquid,
- a means (10) for determining the number of measures of cooking liquid (2) to be introduced into the pot (3) as a function the estimated food cooking time at the operating pressure, said determination means (10) comprising a look-up table (10A) showing a correspondence between integral numbers (11, 12, 13) of measures of cooking liquid (2) and ranges (14, 15, 16) of estimated cooking time of the food at the operating pressure.
